(19) Europäisches Patentamt
European Patent Office
Office européen des brevets

(11) EP 4 249 098 A1

(12) **EUROPEAN PATENT APPLICATION**
published in accordance with Art. 153(4) EPC

(43) Date of publication:
27.09.2023 Bulletin 2023/39

(51) International Patent Classification (IPC):
B01D 21/01 (2006.01)     C02F 1/52 (2023.01)
C02F 1/56 (2023.01)

(21) Application number: 21894527.7

(22) Date of filing: 10.11.2021

(52) Cooperative Patent Classification (CPC):
B01D 21/01; C02F 1/52; C02F 1/56

(86) International application number:
PCT/JP2021/041304

(87) International publication number:
WO 2022/107653 (27.05.2022 Gazette 2022/21)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 17.11.2020 JP 2020190648

(71) Applicant: Kao Corporation
Chuo-ku
Tokyo 103-8210 (JP)

(72) Inventors:
• KOJIMA Hironori
Wakayama-shi, Wakayama 640-8580 (JP)
• FUKUDA Masaya
Wakayama-shi, Wakayama 640-8580 (JP)
• ISHIZUKA Hitoshi
Tokyo 103-8210 (JP)

(74) Representative: Hoffmann Eitle
Patent- und Rechtsanwälte PartmbB
Arabellastraße 30
81925 München (DE)

(54) **WATER TREATMENT AGENT**

(57)     A water treatment agent containing, (a) an inorganic flocculating agent, (b) a polymeric flocculating agent and (c) a non-swellable aluminosilicate compound with a volume swelling ratio of 120% or less as determined by the following formula (1) [hereinafter referred to as component (c)],

$$\text{formula (1)   volume swelling ratio } (\%) = (L1/L2) \times 100$$

wherein L1 represents a volume of component (c) 24 hours after adding 0.5 g of component (c) to 50 ml of ion exchange water at 25°C, and
L2 represents an apparent volume of 0.5 g of component (c) in the air.

EP 4 249 098 A1

**Description**

Field of the Invention

The present invention relates to a water treatment agent and a method for purifying water.

Background of the Invention

Securing safe water is one of the most important activities in general life. Developed countries have well-developed water use related infrastructure. However, under present circumstances, there are still many areas on the earth where sufficient water is not available, and people living in such areas are forced to work very hard to secure water. Therefore, technologies that enable easy purification of sludge and other polluting components existing in river water, lake water, groundwater, rainwater or the like are strongly desired.

If domestic wastewater discharged for washing clothes, hands, tableware, one's body and others could be reused in areas where sufficient water is not available, full use could be made of precious water resources, but under present circumstances, wastewater is disposed of as it is, and it is difficult to say that it is fully reused. This situation occurs because domestic wastewater often includes surfactants, and the surfactants themselves or pollutants emulsified or dispersed via the surfactants cannot be easily separated from the water.

JP-A 2003-236559 discloses a method for collecting pollutants in polluted water comprising, adding a bentonite solution, an aluminum sulfate solution and a polymeric flocculating agent solution. Further, it discloses that the pollutants can be efficiently precipitated by adding a kaolin mineral powder to the polluted water as a catalyst.

JP-A 2001-340704 discloses a flocculating agent consisting of, a coagulating agent such as polyaluminum chloride (PAC) or the like, a precipitation aiding component such as kaolin or the like and a polymeric flocculating agent such as polyacrylamide polymers or the like.

JP-A 2000-135407 discloses a powder flocculating agent comprising, a flocculating agent such as polyaluminum chloride (PAC) or the like, a sedimentation promoting agent such as clays of aluminum silicate compounds or the like and a polymeric flocculating agent such as polyacrylamide polymers or the like.

Summary of the Invention

In order to reuse wastewater, efficient separation of various polluting components from the wastewater is desirable. As one of such methods, a method of flocculating the polluting components and separating them from the water is possible. In this method, the more the flocculation is promoted and flocculates (also called flocs) of the polluting components are enlarged, the more easily they are removed. During removal, some workers handle the flocculates relatively gently while others handle them relatively roughly, causing variations in conditions under which they are removed. Therefore, in order to achieve easy removal regardless of removal conditions, enhancing the strength of flocculates is considered to be desirable.

The present invention provides a water treatment agent and a water purification method having water purification treatment ability and capable of forming flocculates that can be disposed of as high-strength lumps.

The present invention relates to a water treatment agent containing, (a) an inorganic flocculating agent [hereinafter referred to as component (a)], (b) a polymeric flocculating agent [hereinafter referred to as component (b)] and (c) a non-swellable aluminosilicate compound with a volume swelling ratio of 120% or less as determined by the following formula (1) [hereinafter referred to as component (c)],

formula (1) volume swelling ratio (%)=(L1/L2)×100

wherein L1 represents a volume of component (c) 24 hours after adding 0.5 g of component (c) to 50 ml of ion exchange water at 25°C, and

L2 represents an apparent volume of 0.5 g of component (c) in the air.

Further, the present invention relates to a method for purifying water including, adding components (a), (b) and (c) to water to be treated including water and polluting components.

According to the present invention, provided are a water treatment agent and a water purification method having water purification treatment ability and capable of forming flocculates that can be disposed of as high-strength lumps.

Embodiments of the Invention

<Water treatment agent>

In the present invention, it is inferred that component (a) flocculates polluting components, for example, surfactants, oil and grease stains, soil or the like to form flocculates, and component (b) intervenes between the flocculates to strengthen the binding between the flocculates and make the flocculation difficult to loosen. It is further inferred that inter-surface adhesive force due to hydrophobic interactions of component (c) or the like improves the flocculating performance of the water treatment agent and the strength of flocculates. The water treatment agent of the present invention, which is excellent in the ability to flocculate polluting components such as surfactants or the like and improves the strength of flocculates, enables easy removal of solidified flocculates regardless of working conditions. The water treatment agent of the present invention can be applied to water including polluting components.

The water treatment agent of the present invention contains (a) an inorganic flocculating agent, (b) a polymeric flocculating agent and (c) a non-swellable aluminosilicate compound.

Component (a) is an inorganic flocculating agent. Component (a) has the function of flocculating polluting components.

Examples of component (a) include one or more inorganic flocculating agents selected from aluminum sulfate, polyaluminum chloride, aluminum oxide, aluminum hydroxide, iron(II) sulfate, iron(III) chloride, iron(III) sulfate, polyferric sulfate, sodium silicate, sodium aluminate, sodium sulfite and an aluminum alum.

Component (a) is preferably one or more inorganic flocculating agents selected from aluminum sulfate, polyaluminum chloride, iron(II) sulfate, iron(III) sulfate and polyferric sulfate.

Component (b) is a polymeric flocculating agent. A polymeric flocculating agent is an organic compound with a high molecular weight and can be used as a component for water treatment agents.

The weight average molecular weight of component (b) is preferably 500,000 or more, more preferably 1,000,000 or more and further preferably 2,000,000 or more, and preferably 15,000,000 or less, more preferably 12,000,000 or less and further preferably 10,000,000 or less. The weight average molecular weight of component (b) is determined for polyethylene oxide by calculation from intrinsic viscosity and determined for others from gel permeation chromatography (GPC).

Examples of the polymeric flocculating agent of component (b) include a polymeric flocculating agent composed of a water-soluble (co)polymer having water-soluble monomer (b1) as a constituent unit. Water-soluble monomer (b1) includes nonionic monomer (b11), cationic monomer (b12), anionic monomer (b13) listed below and mixtures of two or more of them. The water-soluble monomer is preferably a water-soluble unsaturated monomer. In addition to water-soluble monomer (b1), water-insoluble unsaturated monomer (x) and cross-linkable monomer (y) may be used together as necessary as monomers constituting the water-soluble (co)polymer in a range that the effects of the present invention are not impaired.

As used herein, "water-soluble monomer" or "water-soluble (co)polymer" means a monomer or a (co)polymer whose solubility to water at 20°C is 1 g or more per 100 g of water, and "water-insoluble monomer" means a monomer whose solubility to water at 20°C is less than 1 g per 100 g of water.

Note that number average molecular weight and weight average molecular weight measured by a gel permeation chromatography (GPC) method are hereinafter abbreviated respectively as GMn and GMw, and such GMn and GMw are determined under the following GPC measurement conditions:

<GPC measurement conditions>

Instrument: HLC-802A, manufactured by Tosoh Corporation
Column: TSKgel GMH6 (two columns)
Measurement temperature: 40°C
Sample solution: 0.5 mass% tetrahydrofuran solution
Solution injection volume: 200 ul
Detection instrument: refractive index detector
Standard: polyethylene glycol

(b11) Nonionic monomer

Examples include the following and mixtures of them.

(b11-1) (Meth)acrylate

Examples include those with a carbon number (hereinafter abbreviated as C) of 4 or more and a number average molecular weight [measured by the gel permeation chromatography (GPC) method, and hereinafter abbreviated as GMn] of 5,000 or less, for example, hydroxy group-containing (meth)acrylates [for example, hydroxyethyl-, diethylene glycol mono-, polyethylene glycol (with a degree of polymerization of 3 or more and 50 or less) mono- and polyglycerol (with a degree of polymerization of 1 or more and 10 or less) mono(meth)acrylates] and alkyl (an alkyl group with C1 or more and C2 or less) acrylates (those with C4 or more and C5 or less, for example, methyl acrylate and ethyl acrylate).

(b11-2) (Meth)acrylamide and derivative thereof

Examples include those with C3 or more and C30 or less, for example, (meth)acrylamide, N-alkyl (with C1 or more and C3 or less) (meth)acrylamides [N-methyl and isopropyl (meth)acrylamides or the like] and N-alkylol (meth)acrylamides [N-methylol (meth)acrylamide or the like].

(b11-3) Nitrogen atom-containing ethylenic unsaturated compound other than the above

Examples include those with C3 or more and C30 or less, for example, acrylonitrile, N-vinylformamide, N-vinyl-2-pyrrolidone, N-vinylimidazole, N-vinylsuccinimide, N-vinylcarbazole and 2-cyanoethyl (meth)acrylate.

(b11-4) Alkylene oxide

Examples include ethylene oxide and propylene oxide.

(b12) Cationic monomer

Examples include the following, salts of them [for example, inorganic acid salts (hydrochlorides, sulfates, phosphates and nitrates or the like), methyl chloride salts, dimethyl sulfate salts and benzyl chloride salts or the like] and mixtures of them.

(b12-1) Nitrogen atom-containing (meth)acrylate

Examples include those with C5 or more and C30 or less, for example, aminoalkyl (with C2 or more and C3 or less) (meth)acrylates, N,N-dialkyl (with C1 or more and C2 or less) aminoalkyl (with C2 or more and C3 or less) (meth)acrylates [N,N-dimethylaminoethyl (meth)acrylate, N,N-dimethylaminopropyl (meth)acrylate, N,N-diethylaminoethyl (meth)acrylate, N,N-diethylaminopropyl (meth)acrylate or the like] and heterocyclic (meth)acrylates [N-morpholinoethyl (meth)acrylate or the like].

(b12-2) Nitrogen atom-containing (meth)acrylamide derivative

Examples include those with C5 or more and C30 or less, for example, N,N-dialkyl (with C1 or more and C2 or less) aminoalkyl (with C2 or more and C3 or less) (meth)acrylamides [N,N-dimethylaminoethyl (meth)acrylamide or the like].

(b12-3) Ethylenic unsaturated compound having amino group

Examples include those with C5 or more and C30 or less, for example, vinylamine, vinylaniline, (meth)allylamine, p-aminostyrene or the like.

(b12-4) Compound having amine imide group

Examples include those with C5 or more and C30 or less, for example, 1,1,1-trimethylamine (meth)acrylimide, 1,1-dimethyl-1-ethylamine (meth)acrylimide, 1,1-dimethyl-1-(2'-phenyl-2'-hydroxyethyl)amine (meth)acrylimide or the like.

(b12-5) Nitrogen atom-containing vinyl monomer other than the above

Examples include those with C5 or more and C30 or less, for example, 2-vinylpyridine, 3-vinylpiperidine, vinyl pyrazine and vinylmorpholine.

(b-13) Anionic monomer

Examples include the following acids, salts of them [alkali metal salts (lithium, sodium, potassium salts or the like, the same applies hereinafter), alkaline earth metal salts (magnesium, calcium salts or the like, the same applies hereinafter), ammonium salts and amine (with C1 or more and C20 or less) salts or the like] and mixtures of them.

(b13-1) Unsaturated carboxylic acid

Examples include those with C3 or more and C30 or less, for example, (meth)acrylic acid, maleic acid (anhydride), fumaric acid, itaconic acid (anhydride), vinyl benzoic acid and allyl acetic acid.

(a13-2) Unsaturated sulfonic acid

Examples include aliphatic unsaturated sulfonic acids with C2 or more and C20 or less (vinylsulfonic acid or the like), aromatic unsaturated sulfonic acids with C6 or more and C20 or less (styrenesulfonic acid or the like), sulfonic acid group-containing (meth)acrylates [sulfoalkyl (with C2 or more and C20 or less) (meth)acrylates [2-(meth)acryloyloxyethanesulfonic acid, 2-(meth)acryloyloxypropanesulfonic acid, 3-(meth)acryloyloxypropanesulfonic acid, 2-(meth)acryloyloxybutanesulfonic acid, 4-(meth)acryloyloxybutanesulfonic acid, 2-(meth)acryloyloxy-2,2-dimethylethanesulfonic acid, p-(meth)acryloyloxymethylbenzenesulfonic acid or the like] and others], sulfonic acid group-containing (meth)acrylamides [2-(meth)acryloylaminoethanesulfonic acid, 2- and 3-(meth)acryloylaminopropanesulfonic acids, 2- and 4-(meth)acryloylaminobutanesulfonic acids, 2-(meth)acryloylamino-2,2-dimethylethanesulfonic acid, p-(meth)acryloylaminomethylbenzenesulfonic acid or the like], alkyl (with C1 or more and C20 or less) (meth)allyl sulfosuccinic acid esters [methyl (meth)allyl sulfosuccinic acid ester or the like] and others.

(b13-3) (Meth)acryloyl polyoxyalkylene (with C1 or more and C6 or less) sulfuric acid ester

Examples include (meth)acryloyl polyoxyethylene (with a degree of polymerization of 2 or more and 50 or less) sulfuric acid esters or the like.

Examples of water-insoluble unsaturated monomer (x) that may be used together with (b) as necessary include the following (x1) to (x5) and mixtures of them.

(x1) (Meth)acrylate with C6 or more and C23 or less

Examples include aliphatic or alicyclic alcohol (with C3 or more and C20 or less) (meth)acrylates [propyl-, butyl-, lauryl-, octadecyl- and cyclohexyl (meth)acrylates or the like] and epoxy group (with C4 or more and C20 or less)-containing (meth)acrylates [glycidyl (meth)acrylate or the like].

(x2) Unsaturated carboxylic acid monoester of [monoalkoxy (with C1 or more and C20 or less)-, monocycloalkoxy (with C3 or more and C12 or less)- or monophenoxy] polypropylene glycol (hereinafter abbreviated as PPG) (with a degree of polymerization of 2 or more and 50 or less)

Examples include (meth)acrylic acid esters of propylene oxide (hereinafter abbreviated as PO) adducts of mono-ols (with C1 or more and C20 or less) or monohydric phenols (with C6 or more and C20 or less) [ω-methoxy PPG mono(meth)acrylate, ω-ethoxy PPG mono(meth)acrylate, ω-propoxy PPG mono(meth)acrylate, ω-butoxy PPG mono(meth)acrylate, ω-cyclohexyl PPG mono(meth)acrylate, ω-phenoxy PPG mono(meth)acrylate or the like] and (meth)acrylic acid esters of PO adducts of diols (with C2 or more and C20 or less) or dihydric phenols (with C6 or more and C20 or less) [ω-hydroxyethyl (poly)oxypropylene mono(meth)acrylate or the like] or the like.

(x3) Unsaturated hydrocarbon with C2 or more and C30 or less

Examples include ethylene, nonene, styrene, 1-methylstyrene or the like.

(x4) Carboxylic acid (with C2 or more and C30 or less) ester of unsaturated alcohol [those with C2 or more and C4 or less, for example, vinyl alcohol and (meth)allyl alcohol] (vinyl acetate or the like)

(x5) Halogen-containing monomer (those with C2 or more and C30 or less, for example, vinyl chloride)

Further, examples of cross-linkable monomer (y) include the following (y1) to (y5), salts of them [for example, basic monomers form inorganic acid salts (hydrochlorides, hydrobromides, hydroiodides, sulfates, sulfites, phosphates, nitrates or the like), methyl chloride salts, dimethyl sulfate salts and benzyl chloride salts or the like, and acidic monomers form alkali metal salts, alkaline earth metal salts and amine (those with C1 or more and C20 or less, for example, methylamine, ethylamine and cyclohexylamine) salts] and mixtures thereof.

(y1) Bis(poly(2 or more and 4 or less)(meth)acrylamide)

Examples include those with C5 or more and C30 or less, for example, N,N'-methylenebisacrylamide.

(y2) Poly(2 or more and 4 or less)(meth)acrylate

Examples include those with C8 or more and C30 or less, for example, ethylene glycol di(meth)acrylate and pentaerythritol [poly(2 or more and 4 or less)](meth)acrylates.

(y3) Monomer containing (2 or more and 20 or less) vinyl groups

Examples include those with C4 or more and a GMn of 6,000 or less, for example, divinylamine, poly(2 or more and 20 or less)vinylamines of polyvalent(2 or more and 5 or less) amines [those with C2 or more and a GMn of 3,000 or less, for example, ethylenediamine and polyethyleneimine (with C4 or more and a GMn of 3,000 or less)], divinyl ether, poly(2 or more and 20 or less)vinyl ethers of polyhydric alcohols [those with C2 or more and a GMn of 3,000 or less, for example, alkylene (with C2 or more and C6 or less) glycols [ethylene glycol, propylene glycol and 1,6-hexanediol (hereinafter abbreviated respectively as EG, PG and HD) or the like], polyoxyalkylenes [those with a GMn of 2,000 or more and 3,000 or less, for example, polyethylene glycol (hereinafter abbreviated as PEG) (with a molecular weight of 106 or more and a GMn of 3,000 or less), PPG (with a molecular weight of 134 or more and a GMn of 3,000 or less) and polyoxyethylene (with a molecular weight of 106 or more and a GMn of 3,000 or less)/polyoxypropylene (with a molecular weight of 134 or more and a GMn of 3,000 or less) block copolymer], trimethylolethane, trimethylolpropane, (poly)(2 or more and 50 or less)glycerin, pentaerythritol, sorbitol (hereinafter abbreviated respectively as TME, TMP, GR, PE and SO) and starch], and others.

(y4) Monomer containing (2 or more and 20 or less) allyl groups

Examples include those with C6 or more and a GMn of 3,000 or less, for example, di(meth)allylamine, N-alkyl (with C1 or more and C20 or less) di(meth)allylamines, poly(2 or more and 20 or less)(meth)allylamines of polyvalent amines (those described above), di(meth)allyl ether, poly(2 or more and 20 or less)(meth)allyl ethers of polyhydric alcohols (those described above) and poly(2 or more and 20 or less)(meth)allyloxyalkanes (with C1 or more and C20 or less) (tetraallyloxyethane or the like).

(y5) Epoxy group-containing monomer

Examples include those with C8 or more and a GMn of 6,000 or less, for example, EG diglycidyl ether, PEG diglycidyl ether and GR triglycidyl ether.

Examples of component (b) include a polymeric flocculating agent composed of a water-soluble (co)polymer having one or more water-soluble monomers selected from nonionic monomer (b11) and anionic monomer (b13) as a constituent unit.

Examples of component (b) include a polymeric flocculating agent composed of one or more water-soluble (co)polymers selected from water-soluble (co)polymers having nonionic monomer (b11) as a constituent unit and water-soluble (co)polymers having anionic monomer (b13) as a constituent unit.

Examples of the water-soluble (co)polymers having nonionic monomer (b11) as a constituent unit include water-soluble (co)polymers having one or more nonionic monomers selected from (meth)acrylamide and derivative thereof (b11-2) and alkylene oxide (b11-4) as a constituent unit, wherein the one or more nonionic monomers are further selected from alkylene oxide (b11-4) .

Examples of the water-soluble (co)polymers having anionic monomer (b13) as a constituent unit include water-soluble (co)polymers having unsaturated carboxylic acid (b13-1) as a constituent unit.

Component (b) is preferably one or more polymeric flocculating agents selected from nonionic polymeric flocculating agents and anionic polymeric flocculating agents. Component (b) is more preferably a nonionic polymeric flocculating agent.

Examples of component (b) include one or more polymeric flocculating agents selected from polyalkylene oxides, polyacrylamide and polyacrylic acid or salts thereof.

Component (b) is preferably a polyalkylene oxide and more preferably a polyethylene oxide.

The polyalkylene oxide is preferably one including ethylene oxide as a polymerization unit.

The polyalkylene oxide is preferably a polyethylene oxide. The polyethylene oxide preferably has a weight average molecular weight of 500,000 or more.

Component (b) is preferably a polymeric flocculating agent having spinnability in terms of improving flocculating ability.

In the present disclosure, "spinnability" is the so-called "stringy" property in which the stretchability of an object manifests itself, and for example, "the stringiness of natto" or the like is an example thereof. In one or more embodiments, spinnability is the property of a liquid composition producing a continuous string-like structure without breaking to form droplets when slowly dropped or stretched by holding one end thereof, and for example, "the stringiness of animal or plant mucus" or the like is an example. Spinnability is one of the elastic relaxation phenomena of liquid compositions and is generally known to be a physical property completely independent of surface tension or viscosity.

Whether component (b) has spinnability or not can be determined in the following manner. For example, the determination is made by a method in conformance with the following [spinnability determination method] using an aqueous solution obtained by dissolving a polymeric flocculating agent in purified water at a predetermined concentration (for example, 10 mass%), and if the aqueous solution has spinnability, the polymeric flocculating agent can be judged to have spinnability.

[Spinnability determination method]

An aqueous solution that produces a sticky string when quietly dropped from a pasteur pipette with a tip inner diameter of 1 mm (made of glass, for example, ASAHITECHNO GLASS, IK-PAS-5P) can be considered to be an aqueous solution that shows spinnability in the present disclosure.

Component (b) is preferably a polymeric flocculating agent whose aqueous solution at a concentration of 30 g/L or less shows spinnability, more preferably a polymeric flocculating agent whose aqueous solution at a concentration of 10 g/L or less shows spinnability, and further preferably a polymeric flocculating agent whose aqueous solution at a concentration of 5 g/L or less shows spinnability.

Component (c) is a non-swellable aluminosilicate compound.

Whether component (c) is "non-swellable" or not can be determined in the following manner. For example, the volume swelling ratio of component (c) is calculated on the basis of the following formula (1), and if the volume swelling ratio is 120% or less, it can be judged to be a non-swellable aluminosilicate compound. Note that, in the formula (1), L1 may represent the apparent volume of an aluminosilicate compound in ion exchange water, and L2 may represent the apparent volume of an aluminosilicate compound in the air.

$$\text{formula (1)} \quad \text{volume swelling ratio } (\%) = (L1/L2) \times 100$$

wherein L1 represents the volume of component (c) 24 hours after adding 0.5 g of component (c) to 50 ml of ion exchange water at 25°C, and

L2 represents the apparent volume of 0.5 g of component (c) in the air.

Specifically, the volume swelling ratio can be calculated by a measurement method described in Examples which conforms to the Japan Bentonite Association's standard test method "Swelling Test Method for Bentonite (Powder)" (JBAS-104-77). Those skilled in the art can easily recognize the method for testing the volume swelling ratio and can make measurements. Component (c) has a volume swelling ratio of preferably 120% or less, more preferably 110% or less and further preferably 105% or less, and preferably 100% or more from the viewpoint of improving the strength of flocculates.

Component (c) may be a laminar compound. A laminar compound is a compound in which plate-like inorganic crystals with a side of the order of micrometers and a thickness of the order of nanometers are laminated.

Component (c) can be selected, for example, from minerals. The minerals may be natural products or artificial products. Examples of component (c) include kaolin, mica, vermiculite, zeolite or the like.

Component (c) is preferably one or more selected from kaolin and mica.

The average particle size of component (c) is preferably 0.1 $\mu$m or more, more preferably 1 $\mu$m or more and

further preferably 2 μm or more, and preferably 500 μm or less, more preferably 300 μm or less and further preferably 100 μm or less from the viewpoint of improving the strength of flocculates. This average particle size is a value measured by the method in JIS Z 8815.

In the water treatment agent of the present invention, the content of component (a) is preferably 2 mass% or more, more preferably 10 mass% or more, further preferably 20 mass% or more and further preferably 30 mass% or more, and preferably 95 mass% or less and more preferably 80 mass% or less relative to the total content of components (a), (b) and (c) from the viewpoint of more enhancing the strength of flocculates.

Components (a), (b) and (c) can each be formulated and contained into the water treatment agent. In the present invention, the formulation amounts of components (a), (b) and (c) and others when the water treatment agent of the present invention is prepared can be considered to be the contents of components (a), (b) and (c) and others (the same applies hereinafter).

In the water treatment agent of the present invention, the mass ratio of the content of component (a) to the content of component (b), (a)/(b), is preferably 1 or more, more preferably 5 or more and further preferably 10 or more from the viewpoint of water purification ability, and preferably 10,000 or less, more preferably 5,000 or less, further preferably 3,000 or less, further preferably 1,000 or less and further preferably 500 or less from the viewpoint of water purification ability.

In the water treatment agent of the present invention, the content of component (b) is preferably 0.005 mass% or more, more preferably 0.01 mass% or more and further preferably 0.1 mass% or more, and preferably 50 mass% or less, more preferably 25 mass% or less and further preferably 5 mass% or less relative to the total content of components (a), (b) and (c).

In the water treatment agent of the present invention, the content of component (c) relative to the total content of components (a), (b) and (c) is preferably 3 mass% or more, more preferably 5 mass% or more, further preferably 10 mass% or more, furthermore preferably 20 mass% or more and furthermore preferably 30 mass% or more from the viewpoint of improving the strength of flocculates, and preferably 98 mass% or less, more preferably 95 mass% or less, further preferably 90 mass% or less and furthermore preferably 80 mass% or less from the viewpoint of water purification ability.

In the water treatment agent of the present invention, the mass ratio of the content of component (c) to the content of component (b), (c)/(b), is preferably 1 or more, more preferably 5 or more and further preferably 10 or more from the viewpoint of improving the strength of flocculates, and preferably 10,000 or less, more preferably 5,000 or less and further preferably 1,000 or less from the viewpoints of improvement in the strength of flocculates and water purification ability.

The water treatment agent of the present invention can contain (d) a surfactant (excluding component (b)) [hereinafter referred to as component (d)]. Component (d) may be a surfactant with a molecular weight of less than 500,000. In the present invention, the use of a surfactant together with components (a) and (b) enables further improvement in the effect of purifying water to be treated, for example, enables further improvement in the rate of recovery of purified water.

Examples of component (d) include one or more surfactants selected from anionic surfactants, nonionic surfactants, cationic surfactants and amphoteric surfactants. Component (d) may be a water-soluble polymeric surfactant, for example, a water-soluble polymer with a weight average molecular weight of less than 500,000.

Component (d) is preferably an anionic surfactant. The water treatment agent of the present invention preferably contains an anionic surfactant as component (d).

Examples of the anionic surfactants include anionic surfactants having a hydrocarbon group with 8 or more and 24 or less carbons and a sulfonic acid group or a sulfate group. The sulfonic acid group or the sulfate group may be a salt. Examples of the anionic surfactants having a sulfate group include alkyl or alkenyl sulfates and polyoxyalkylene alkyl or alkenyl ether sulfates. Examples of the anionic surfactants having a sulfonic acid salt group include alkylbenzene sulfonates. Other examples of the anionic surfactants include fatty acids with 12 or more and 24 or less carbons or salts thereof. The anionic surfactants may be water-soluble polymers, and may be water-soluble polymers with a weight average molecular weight of less than 500,000, for example, sodium β-naphthalene sulfonate formaldehyde condensates.

Examples of a salt in the anionic surfactants include alkali metal salts such as a sodium salt, a potassium salt or the like, salts of alkaline earth metals such as magnesium or the like, and organic amine salts such as a triethanolamine salt or the like. The salt in the anionic surfactants is preferably an alkali metal salt and more preferably a sodium salt.

Examples of the nonionic surfactants include polyoxyalkylene alkyl ether nonionic surfactants.

Examples of the cationic surfactants include quaternary ammonium surfactants or tertiary amine surfactants.

Examples of the amphoteric surfactants are not particularly limited to, but include, for example, N-alkyl-N,N-dimethylamine oxides having an alkyl group with 8 or more and preferably 10 or more and 18 or less and preferably 16 or less carbons, N-alkyl carbonyl aminopropyl-N,N-dimethylamine oxides having an alkyl group with a carbon number falling within the above range, N-alkyl-N,N-dimethylaminoacetic acid betaines having an alkyl group with a carbon number falling within the above range, N-alkyl carbonyl aminopropyl-N,N-dimethylaminoacetic acid betaines having an alkyl group with a carbon number falling within the above range, N-alkyl-N,N-dimethyl-N-(2-hydroxysulfopropyl) ammonium sulfobetaines having an alkyl group with a carbon number falling within the above range or the like.

When the water treatment agent of the present invention contains component (d), the water treatment agent of the present invention can contain component (d) in an amount of preferably 50 parts by mass or more, more preferably 100 parts by mass or more, further preferably 150 parts by mass or more, furthermore preferably 200 parts by mass or more and furthermore preferably 300 parts by mass or more, and preferably 10,000 parts by mass or less, more preferably 2,000 parts by mass or less, further preferably 1,500 parts by mass or less and furthermore preferably 1,200 parts by mass or less relative to 1,000 parts by mass of component (a) from the viewpoints of improvement in flocculating performance and handling.

When the water treatment agent of the present invention contains component (d), the water treatment agent of the present invention can contain component (d) in an mount of preferably 50 parts by mass or more, more preferably 100 parts by mass or more and further preferably 150 parts by mass or more, and preferably 100,000 parts by mass or less, more preferably 20,000 parts by mass or less and further preferably 5,000 parts by mass or less relative to 1,000 parts by mass of component (c) from the viewpoint of flocculating performance.

The water treatment agent of the present invention can contain water-soluble inorganic compounds, bleaching agents, bactericides, antibacterial agents, antiseptics, pH adjusters and other components (excluding components (a), (b) and (c)) as other optional components. The pH adjusters are used to control the pH of water to be treated when the water to be treated is purified with the water treatment agent of the present invention, and examples include alkali agents and acid agents. Examples of the alkali agents include caustic soda, sodium carbonate, sodium bicarbonate, sodium silicate, monoethanolamine or the like, and examples of the acid agents include inorganic acids such as sodium bisulfate or the like, organic acids such as citric acid, lactic acid or the like, and others.

The water treatment agent of the present invention may be either in powder or liquid form.

The water treatment agent of the present invention may be a multi-agent type water treatment agent composed of a combination of agents including a component selected from components (a), (b) and (c), wherein an agent formulated with component (a) is different from one formulated with component (b). For example, the water treatment agent of the present invention may be a multi-agent type water treatment agent including a first agent containing component (a) and a second agent containing component (b). The first agent may be one not containing component (b). Further, the second agent may be one not containing component (a). The first agent and/or the second agent can be appropriately formulated with component (c) or other optional components such as component (d) or the like, or an agent other than the first agent and the second agent can be formulated therewith to form a multi-agent type water treatment agent with three or more agents.

The total content of components (a), (b) and (c) in the water treatment agent of the present invention is preferably 10 mass% or more, more preferably 20 mass% or more and further preferably 30 mass% or more, and preferably 100 mass% or less and more preferably 95 mass% or less. The total content of components (a), (b) and (c) in the water treatment agent of the present invention may be 100 mass%. In other words, the water treatment agent of the present invention may be a water treatment agent composed of components (a), (b) and (c).

Further, the total content of components (a), (b), (c) and (d) in the water treatment agent of the present invention is preferably 10 mass% or more, more preferably 20 mass% or more and further preferably 30 mass% or more, and preferably 100 mass% or less and more preferably 95 mass% or less. The total content of components (a), (b), (c) and (d) in the water treatment agent of the present invention may be 100 mass%. In other words, the water treatment agent of the present invention may be a water treatment agent composed of components (a), (b), (c) and (d) .

The water treatment agent of the present invention can be suitably used in the method for purifying water of the present invention described below.

<Method for purifying water>

The method for purifying water of the present invention relates to a method for purifying water including, adding components (a), (b) and (c) to water to be treated including water and polluting components.

The method for purifying water of the present invention includes, as one aspect, a method for purifying water including, adding components (a), (b) and (c) to water to be treated including water and polluting components, wherein components (a), (b) and (c) are added to the water to be treated such that the addition amount of component (c) is 3 mass% or more relative to the total addition amount of components (a), (b) and (c).

Further, the method for purifying water of the present invention may be a method for purifying water including, adding components (a), (b), (c) and (d) to water to be treated including water and polluting components.

The matters stated in the water treatment agent of the present invention can be appropriately applied to the method for purifying water of the present invention. Specific examples, preferable examples or the like of components (a), (b), (c) and (d) are the same as those in the water treatment agent of the present invention.

The polluting components included in the water to be treated may be formed of organic matter, inorganic matter and combinations thereof.

Examples of the polluting components include, for example, soil (which means that clay, mud or the like may be included), bacteria, heavy metals and their ions, sebum, lipids, dyes, keratin, hair, dyes, coloring matter, foods, fibers, surfactants and others. The polluting components included in the water to be treated may be determined depending on uses of the water after treatment or the like. For example, if the water after treatment is used as domestic wastewater, soil, surfactants or the like in the water to be treated may be polluting components.

In the present invention, the use of components (a), (b) and (c) under conditions where a surfactant coexists in the water to be treated more improves the effect of purifying water. The surfactant may be included in the water to be treated as a polluting component and/or as component (d). For example, it is preferable in the present invention that the water to be treated include the surfactant together with components (a), (b) and (c). For example, it is preferable in the present invention that the water to be treated after the addition of components (a), (b) and (c) include the surfactant. Examples of the surfactant included in the water to be treated include those listed in the water treatment agent of the present invention.

The concentration of the surfactant in the water to be treated may be preferably 10 ppm or more, more preferably 50 ppm or more and further preferably 600 ppm or more, and preferably 100,000 ppm or less, more preferably 20,000 ppm or less and further preferably 5,000 ppm. In order to make the concentration of the surfactant in the water to be treated fall within the above range, component (d) may be added to the water to be treated.

In the present invention, the mass ratio of component (a) to the surfactant in the water to be treated, (a)/surfactant, may be preferably 0.01 or more, more preferably 0.1 or more and further preferably 0.5 or more, and preferably 10,000 or less, more preferably 1,000 or less and further preferably 500 or less from the viewpoint of flocculating performance. In order to make the mass ratio fall within the above range, component (d) may be added to the water to be treated.

In the present invention, the mass ratio of component (c) to the surfactant in the water to be treated, (c)/surfactant, may be preferably 0.01 or more, more preferably 0.1 or more and further preferably 0.5 or more, and preferably 10,000 or less, more preferably 5,000 or less and further preferably 1,000 or less from the viewpoint of flocculating performance. In order to make the mass ratio fall within the above range, component (d) may be added to the water to be treated.

The concentration of the polluting components in the water to be treated may be, for example, 0.1 ppm or more, further 1 ppm or more and further 10 ppm or more, and 100,000 ppm or less, further 10,000 ppm or less and further 5,000 ppm or less. Note that the concentration of the polluting components is determined as the concentration of total solids remaining after evaporation in the water to be treated in conformance with the measurement of total solids remaining after evaporation in JIS K 0102.

The water to be treated to which the present invention is directed may be wastewater discharged from industrial facilities, construction sites, excavation sites, ordinary households or the like, and examples include, for example, wastewater discharged during washing of textile products, cleaning of hard articles and other cleaning processes, or the like.

In the present invention, components (a), (b) and (c) can be added to the water to be treated such that the addition amount of component (c) relative to the total addition amount of components (a), (b) and (c) is preferably 3 mass%, more preferably 5 mass% or more, further preferably 10 mass% or more and furthermore preferably 20 mass% or more from the viewpoint of improving the strength of flocculates, and preferably 98 mass% or less, more preferably 95 mass% or less, further preferably 90 mass% or less and furthermore preferably 80 mass% or less from the viewpoint of water purification ability.

Component (a) can be added to the water to be treated such that the concentration of component (a) in the water to be treated is, for example, 10 ppm or more, further 100 ppm or more and further 500 ppm or more, and 20,000 ppm or less, further 10,000 ppm or less, further 5,000 ppm or less, further 3,000 ppm or less and further 2,000 ppm or less.

Component (b) can be added to the water to be treated such that the concentration of component (b) in the water to be treated is, for example, 0.1 ppm or more, further 1 ppm or more and further 2 ppm or more, and 500 ppm or less, further 300 ppm or less, further 100 ppm or less, further 80 ppm or less, further 60 ppm or less and further 50 ppm or less.

Component (c) can be added to the water to be treated such that the concentration of component (c) in the water to be treated is, for example, 50 ppm or more, further 100 ppm or more and further 200 ppm or more, and 50,000 ppm or less, further 25,000 ppm or less, further 10,000 ppm or less, further 5,000 ppm or less, further 3,000 ppm or less and further 2,000 ppm or less.

In the present invention, components (a) and (b) can be added to the water to be treated such that the ratio of the mass of component (a) to the mass of component (b), (a)/(b), is preferably 1 or more, more preferably 5 or more and further preferably 10 or more from the viewpoint of water purification ability, and preferably 10,000 or less, more preferably 5,000 or less, further preferably 3,000 or less, further preferably 1,000 or less and further preferably 500 or less from the viewpoint of water purification ability.

In the present invention, components (b) and (c) can be added to the water to be treated such that the ratio of the mass of component (c) to the mass of component (b), (c)/(b), is preferably 1 or more, more preferably 5 or more and further preferably 10 or more from the viewpoint of improving the strength of flocculates, and preferably 10,000 or less, more preferably 5,000 or less and further preferably 1,000 or less from the viewpoints of improvement in the strength of flocculates and water purification.

In the present invention, components (a), (b) and (c) are added to the water to be treated in arbitrary order or form, but it is preferable to add components (a) and (b) in such a manner that component (b) is added after component (a) is added. After component (a) is added, component (c) may be added before component (b) is added. Further, component (d) is also added in arbitrary order or form.

In the present invention, it is preferable that the pH of the water to be treated including components (a), (b) and (c) be 4 or more and further 5 or more, and 9 or less and further 8.5 or less. In other words, the present invention preferably includes a step of adjusting the pH of the water to be treated to a value falling within the above range. The pH can be adjusted with any of the above pH adjusters, for example, alkali agents such as caustic soda, sodium carbonate, sodium bicarbonate, sodium silicate, monoethanolamine or the like, and acid agents such as inorganic acids such as sodium bisulfate or the like, organic acids such as citric acid, lactic acid or the like, and others.

In the method for purifying water of the present invention, the water treatment agent of the present invention can be used to add components (a), (b) and (c) to the water to be treated. Further, in the method for purifying water of the present invention, the water treatment agent of the present invention can be used to add components (a), (b) and (c) and optional component (d) to the water to be treated.

Examples

(1) Method for preparing polluted water

475 g of ion exchange water was placed in a 500-ml glass beaker. In the evaluation described later, the amount of polluted water after the addition of components (a), (b) and (c) or the like (polluted water for evaluation) was adjusted to be 500 g (about 500 ml). With this in view, any of the following surfactants was added such that the concentration of the surfactant or a model pollutant in 500 g of the polluted water for evaluation was a value shown in any of Tables 1 to 3. A cylindrical stirrer with a diameter of 11 mm and a length of 43 mm was placed therein, and the mixture was stirred for 60 seconds with the scale of a magnetic stirrer (NISSIN stirrer SW-M120) set to 4. Further, 0.1 g of the following model pollutant was added and stirred for 60 seconds to prepare polluted water which was water to be treated.

    * Surfactant
    LAS: sodium lauryl benzene sulfonate, NEOPELEX G-15 (manufactured by Kao Corporation)
    AS: sodium lauryl sulfate, EMAL 10G (manufactured by Kao Corporation)
    AES: sodium polyoxyethylene lauryl ether sulfate, EMAL 270J (manufactured by Kao Corporation)
    Sodium oleate: FUJIFILM Wako Pure Chemical Corporation
    * Model pollutant

A mixture of 6.0 mass% of lauric acid, 12.0 mass% of myristic acid, 12.0 mass% of pentadecanoic acid, 20.0 mass% of palmitic acid, 5.0 mass% of heptadecanoic acid, 5.0 mass% of stearic acid, 25.0 mass% of triolein and 15.0 mass% of squalene.

(2) Flocculation method

The effect of purifying water was evaluated by using the above-prepared polluted water as water to be treated. While the polluted water whose temperature was adjusted to 30°C was stirred with the scale of the magnetic stirrer (NISSIN stirrer SW-M120) set to 4, component (a) was added such that the concentration in the polluted water for evaluation was a value shown in any of Tables 1 to 3, and 30 seconds later, sodium hydroxide was added to adjust the pH to 7. Note that this pH was almost the same as the pH of the polluted water after the addition of components (b) and (c) (the polluted water whose liquid amount was made to 500 g by adding ion exchange water). Further, 30 seconds later, an aqueous solution prepared in advance with ion exchange water to make the concentration of component (b) 1,000 ppm was added such that the concentration of component (b) in the polluted water for evaluation was a value shown in any of Tables 1 to 3. Further, 30 seconds later, component (c) was added such that the concentration in the polluted water for evaluation was a value shown in any of Tables 1 to 3. Finally, ion exchange water was added to make the total liquid amount 500 g and stirred for a total of 300 seconds to obtain the polluted water for evaluation. After stirred, the polluted water for evaluation was left to stand for 5 minutes in a room where the air temperature was adjusted to 25°C. After the polluted water for evaluation was left to stand to calm down a whirlpool, all the flocculates were gathered with a glass rod to form a lump of flocculates.

(3) Evaluation method

The lump of flocculates was taken out and left to stand on a metal wire mesh (200 mesh) for 60 seconds to remove surface water not retained in the flocculate, and then, 10 g of the flocculate was compressed and formed into a sphere with a diameter of 25 mm. A round clamp (clamping range: 15 mm to 30 mm) was fixed such that a holding part of the round clamp extended in a vertical direction, and the upper half of the formed flocculate was held with the round clamp from above and the clamping position was adjusted to 20 mm. With the point of time when the clamping was completed as the start point of time, the period of time until at least part of the flocculate broke and fell was measured. That this period of time is long means excellent ease of removal (handleability) as a flocculate with high breaking strength. In other words, high breaking strength of a flocculate suppresses its breaking or the like even if workers remove the flocculate with strong force when taking it out, so that workability in taking it out is improved.

(4) Method for evaluating appearance of polluted water after flocculation

After the flocculates were gathered with a glass rod to form the lump of flocculates in the above (2), the polluted water (supernatant liquid) was visually observed, and a colorless and transparent one, a slightly turbid one and an obviously turbid one were evaluated respectively as (Good), (Average) and (Poor).

[Table 1]

| | | | Example | | | | | | | | | | |
| --- | --- | --- | --- | --- | --- | --- | --- | --- | --- | --- | --- | --- | --- |
| | | | 1-1 | 1-2 | 1-3 | 1-4 | 1-5 | 1-6 | 1-7 | 1-8 | 1-9 | 1-10 | 1-11 |
| Pollutant | Model pollutant | LAS | 100 | 100 | 100 | 100 | 100 | 100 | 100 | 100 | 100 | 100 | 100 |
| | | Kaolin | 600 | 600 | 600 | 600 | 600 | 600 | 600 | 600 | 600 | 600 | 600 |
| Water treatment agent | (a) | Aluminum sulfate | 1000 | 100 | 2000 | | | | 1000 | 1000 | 1000 | 1000 | 1000 |
| | | Ferric sulfate | | | | 1000 | | | | | | | |
| | | Polyaluminum chloride | | | | | 1000 | | | | | | |
| | | Polyferric sulfate | | | | | | 1000 | | | | | |
| | (b) | PEO (7,000,000) | 10 | 10 | 10 | 10 | 10 | 10 | 5 | 20 | | | 10 |
| | | AAm (5,000,000) | | | | | | | | | 10 | | |
| | | AA (5,000,000) | | | | | | | | | | 10 | |
| | (c) | Kaolin (volume swelling ratio 100%) | 1000 | 1000 | 1000 | 1000 | 1000 | 1000 | 1000 | 1000 | 1000 | 1000 | 1000 |
| | | Mica (volume swelling ratio 101%) | | | | | | | | | | | |
| | | Zeolite (volume swelling ratio 100%) | | | | | | | | | | | |
| | (c') | Sodium bentonite (volume swelling ratio 757%) | | | | | | | | | | | |
| | | Calcium bentonite (volume swelling ratio 180%) | | | | | | | | | | | |
| | (d) | LAS | | | | | | | | | | | 100 |
| (c)/[(a)+(b)+(c)] (mass%) | | | 49.8 | 90.1 | 33.2 | 49.8 | 49.8 | 49.8 | 49.9 | 49.5 | 49.8 | 49.8 | 49.8 |
| (c)/(b) (mass ratio) | | | 100 | 100 | 100 | 100 | 100 | 100 | 200 | 50 | 100 | 100 | 100 |
| pH after addition of component (a) *1 | | | 7 | 7 | 7 | 7 | 7 | 7 | 7 | 7 | 7 | 7 | 7 |
| Period of time until breaking of flocculate (s) | | | 9.6 | 8.9 | 9.7 | 9.5 | 9.5 | 9.5 | 8.4 | 10.2 | 8.8 | 8.9 | 9.7 |
| Appearance of liquid after flocculation | | | Good | Good | Good | Good | Good | Good | Good | Good | Good | Good | Good |

Concentration in polluted water for evaluation (ppm)

*1 It was adjusted with sodium hydroxide.

In Example 1-11, polluted water was prepared in the same manner as in the above (1), and components (a), (b) and (c) were added to the polluted water in the same manner as in (2). 30 seconds after the addition of component (c), component (d) was added to the polluted water such that the concentration in the polluted water for evaluation was the value shown in Table 1.

13

[Table 2]

EP 4 249 098 A1

| | | | Example | | | | | | | | | | | | Comparative example | | | | |
|---|---|---|---|---|---|---|---|---|---|---|---|---|---|---|---|---|---|---|---|---|
| | | | 1-12 | 1-13 | 1-14 | 1-15 | 1-16 | 1-17 | 1-18 | 1-19 | 1-20 | 1-21 | 1-22 | 1-23 | 1-1 | 1-2 | 1-3 | 1-4 | 1-5 |
| Concentration in polluted water for evaluation (ppm) | Pollutant | Model pollutant | 100 | 100 | 100 | 100 | 100 | 100 | 100 | 100 | 100 | 100 | 100 | 100 | 100 | 100 | 100 | 100 | 100 |
| | | LAS | 600 | 600 | 600 | 600 | 600 | 600 | 600 | 600 | 600 | 600 | 600 | 600 | 600 | 600 | 600 | 600 | 600 |
| | Water treatment agent | (a) Aluminum sulfate | 1000 | 1000 | 1000 | 1000 | 1000 | 1000 | 1000 | 1000 | 1000 | 1000 | 1000 | 1000 | | 1000 | 1000 | 1000 | 1000 |
| | | (a) Ferric sulfate | | | | | | | | | | | | | | | | | |
| | | (a) Polyaluminum chloride | | | | | | | | | | | | | | | | | |
| | | (a) Polyferric sulfate | | | | | | | | | | | | | | | | | |
| | | (b) PEO (7,000,000) | 10 | 10 | 10 | 10 | 5 | 50 | 500 | 0.1 | 5 | 10 | 10 | 10 | 10 | | 10 | 10 | 10 |
| | | (b) AAm (5,000,000) | | | | | | | | | | | | | | | | | |
| | | (b) AA (5,000,000) | | | | | | | | | | | | | | | | | |
| | | (c) Kaolin (volume swelling ratio 100%) | 50 | 100 | 500 | 5000 | 25000 | 50 | 500 | 1000 | 50000 | | | 10 | 1000 | 1000 | | | |
| | | (c) Mica (volume swelling ratio 101%) | | | | | | | | | | 1000 | | | | | | | |
| | | (c) Zeolite (volume swelling ratio 100%) | | | | | | | | | | | 1000 | | | | | | |
| | | (c') Sodium bentonite (volume swelling ratio 757%) | | | | | | | | | | | | | | | | 1000 | |
| | | (c') Calcium bentonite (volume swelling ratio 180%) | | | | | | | | | | | | | | | | | 1000 |
| (c)/[(a)+(b)+(c)] (mass%) | | | 4.7 | 9.0 | 33.1 | 83.2 | 96.1 | 4.5 | 25.0 | 50.0 | 98.0 | 49.8 | 49.8 | 1.0 | 99.0 | 50.0 | 0.0 | 49.8 | 49.8 |
| (c)/(b) (mass ratio) | | | 5 | 10 | 50 | 500 | 5000 | 1 | 1 | 10000 | 10000 | 100 | 100 | 1 | 100 | - | 0 | 100 | 100 |
| pH after addition of component (a)[*1] | | | 7 | 7 | 7 | 7 | 7 | 7 | 7 | 7 | 7 | 7 | 7 | 7 | 7 | 7 | 7 | 7 | 7 |
| Period of time until breaking of flocculate (s) | | | 6.2 | 7.6 | 8.5 | 9.7 | 6.8 | 6.5 | 7.8 | 3.9 | 7.8 | 9.6 | 8.8 | 2.5 | *2 | *2 | 2.3 | 2.1 | 2.3 |
| Appearance of liquid after flocculation | | | Good | Good | Good | Good | Good | Average | Average | Good | Average | Good | Good | Good | Poor | Poor | Good | Good | Good |

*1 It was adjusted with sodium hydroxide. For comparative example 1-1, the pH before adding components (b) and (c) is shown.

*2 The flocculates do not form a lump.

14

[Table 3]

| | | | | Example | | | | | |
|---|---|---|---|---|---|---|---|---|---|
| | | | | 1-1 | 2-1 | 2-2 | 2-3 | 2-4 | 2-5 |
| Concentration in polluted water for evaluation (ppm) | Pollutant | | Model pollutant | 100 | 100 | 100 | 100 | 100 | 100 |
| | | | LAS | 600 | 100 | 1000 | | | |
| | | | AS | | | | 600 | | |
| | | | AES | | | | | 600 | |
| | | | Sodium oleate | | | | | | 600 |
| | Water treatment agent | (a) | Aluminum sulfate | 1000 | 1000 | 1000 | 1000 | 1000 | 1000 |
| | | (b) | PEO (7,000,000) | 10 | 10 | 10 | 10 | 10 | 10 |
| | | (c) | Kaolin (volume swelling ratio 100%) | 1000 | 1000 | 1000 | 1000 | 1000 | 1000 |
| (c)/[(a)+(b)+(c)] (mass%) | | | | 49.8 | 49.8 | 49.8 | 49.8 | 49.8 | 49.8 |
| (c)/(b) (mass ratio) | | | | 100 | 100 | 100 | 100 | 100 | 100 |
| pH after addition of component (a)[*1] | | | | 7 | 7 | 7 | 7 | 7 | 7 |
| Period of time until breaking of flocculate (s) | | | | 9.6 | 7.8 | 10.2 | 8.8 | 8.5 | 8.4 |

*1 It was adjusted with sodium hydroxide.

In the tables, (c)/[(a)+(b)+(c)] is the proportion (mass%) of the content of component (c) to the total content of components (a), (b) and (c). Further, the components in the tables are the following. Component (a)

- Aluminum sulfate: aluminum sulfate (anhydride), TAIMEI CHEMICALS CO., LTD.
- Ferric sulfate: iron(III) sulfate (anhydride), FUJIFILM Wako Pure Chemical Corporation
- Polyaluminum chloride: polyaluminum chloride, TAIMEI CHEMICALS CO., LTD.
- Polyferric sulfate: polyferric sulfate, TAIKI CHEMICAL INDUSTRIES CO., LTD.

Component (b)

The numerals in parentheses are weight average molecular weights.

- PEO (7,000,000): polyethylene oxide having spinnability, PEO-27, Sumitomo Seika Chemicals Company, Limited.
- AAm (5,000,000): polyacrylamide having spinnability, FUJIFILM Wako Pure Chemical Corporation
- AA (5,000,000): sodium polyacrylate having spinnability, AP199, Mitsubishi Chemical Corporation

Component (c)

- Kaolin: KAOLIN, MP Biomedicals, Inc., laminar compound
- Mica: MK-300, Katakura & Co-op Agri Corporation, laminar compound
- Zeolite: ZEOBUILDER CO., LTD.
  Component (c')
- Sodium bentonite: ODOSORUBU, KUROSAKI HAKUDO CO., LTD.
- Calcium bentonite: KUNIPIA, KUNIMINE INDUSTRIES CO.,

LTD.

Component (d)

- LAS: sodium lauryl benzene sulfonate, NEOPELEX G-15 (manufactured by Kao Corporation)

The volume swelling ratios of components (c) and (c') were measured in the following manner.

<Volume swelling ratio>

50 mL of ion exchange water was put in a stoppered color comparison tube with a capacity of 50 mL (IWAKI COLOR-TUBE 50S). Next, 0.5 g of component (c) or (c') was put into the glass tube ten separate times so as not to adhere to the wall surface of the glass tube. After the mixture was left to stand for 24 hours at a temperature falling within the range of 25°C±0.5°C, the height h1 (mm) of a deposit was measured. Further, separately, 0.5 g of component (c) or (c') alone was put into a heat-resistant glass tube with a capacity of 50 mL of the same type as above ten separate times so as not to adhere to the wall surface of the glass tube. After the component was left to stand for 24 hours at a temperature falling within the range of 25°C±0.5°C, the height h2 (mm) of a deposit was measured. Considering that the area S of the inner bottom surface inside the glass tube is constant and L1 and L2 in the formula (1) are equal to the product of h1 and S and the product of h2 and S, respectively, the volume swelling ratio can be calculated from the numerical values of heights h1 and h2. In other words, a value calculated by the following formula (2) was used as the volume swelling ratio (%):

$$\text{formula (2)} \quad \text{volume swelling ratio (\%)} = (h1/h2) \times 100$$

**Claims**

1. A water treatment agent comprising, (a) an inorganic flocculating agent [hereinafter referred to as component (a)], (b) a polymeric flocculating agent [hereinafter referred to as component (b)] and (c) a non-swellable aluminosilicate compound with a volume swelling ratio of 120% or less as determined by the following formula (1) [hereinafter referred to as component (c)],

$$\text{formula (1)} \quad \text{volume swelling ratio (\%)} = (L1/L2) \times 100$$

   wherein L1 represents a volume of the component (c) 24 hours after adding 0.5 g of the component (c) to 50 ml of ion exchange water at 25°C, and
   L2 represents an apparent volume of 0.5 g of the component (c) in the air.

2. The water treatment agent according to claim 1, wherein the content of the component (c) is 3 mass% or more relative to the total content of the components (a), (b) and (c).

3. The water treatment agent according to claim 1 or 2, wherein a mass ratio of the content of the component (c) to the content of the component (b), (c)/(b), is 1 or more and 10,000 or less.

4. The water treatment agent according to any one of claims 1 to 3, wherein the component (c) is a laminar compound.

5. The water treatment agent according to any one of claims 1 to 4, wherein the component (c) is one or more selected from kaolin and mica.

6. The water treatment agent according to any one of claims 1 to 5, comprising (d) a surfactant (excluding component (b)).

7. A method for purifying water comprising, adding (a) an inorganic flocculating agent [hereinafter referred to as component (a)], (b) a polymeric flocculating agent [hereinafter referred to as component (b)] and (c) a non-swellable aluminosilicate compound with a volume swelling ratio of 120% or less as determined by the following formula (1) [hereinafter referred to as component (c)] to water to be treated comprising water and polluting components,

$$\text{formula (1)} \quad \text{volume swelling ratio (\%)} = (L1/L2) \times 100$$

wherein L1 represents a volume of the component (c) 24 hours after adding 0.5 g of the component (c) to 50 ml of ion exchange water at 25°C, and
L2 represents an apparent volume of 0.5 g of the component (c) in the air.

8. The method for purifying water according to claim 7, wherein the components (a), (b) and (c) are added to the water to be treated such that the addition amount of the component (c) is 3 mass% or more relative to the total addition amount of the components (a), (b) and (c).

9. The method for purifying water according to claim 7 or 8, wherein the water to be treated further comprises a coexistent surfactant.

10. The method for purifying water according to any one of claims 7 to 9, wherein the components (b) and (c) are added to the water to be treated such that a mass ratio of the addition amount of the component (c) to the addition amount of the component (b), (c)/(b), is 1 or more and 10,000 or less.

11. The method for purifying water according to any one of claims 7 to 10, wherein the water treatment agent according to any one of claims 1 to 6 is used to add the components (a), (b) and (c).

## INTERNATIONAL SEARCH REPORT

International application No.

**PCT/JP2021/041304**

### A. CLASSIFICATION OF SUBJECT MATTER

***B01D 21/01***(2006.01)i; ***C02F 1/52***(2006.01)i; ***C02F 1/56***(2006.01)i
FI: B01D21/01 110; B01D21/01 102; B01D21/01 105; C02F1/52 Z; C02F1/56 Z

According to International Patent Classification (IPC) or to both national classification and IPC

### B. FIELDS SEARCHED

Minimum documentation searched (classification system followed by classification symbols)

B01D21/01; C02F1/52-56

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | CN 111807489 A (ZHONGKELEMEI ENVIRONMENTAL PROTECTION TECHNOLOGY CO., LTD.) 23 October 2020 (2020-10-23) paragraphs [0023]-[0046] | 1-5, 7-11 |
| Y | | 6 |
| X | CN 106335984 A (NANJING WENZHIYUAN ENVIRONMENTAL PROTECTION TECHNOLOGY CO., LTD.) 18 January 2017 (2017-01-18) paragraphs [0018]-[0026] | 1-5, 7-11 |
| Y | | 6 |
| X | JP 2014-184416 A (KAJIMA CORP.) 02 October 2014 (2014-10-02) paragraphs [0046]-[0049] | 1-3, 7-11 |
| Y | | 4-6 |
| X | JP 2007-196222 A (YOKOHAMA OILS & FATS INDUSTRY CO., LTD.) 09 August 2007 (2007-08-09) claims 9-11, paragraphs [0001], [0031], [0032], [0040] | 1-11 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 December 2021** | **18 January 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

## INTERNATIONAL SEARCH REPORT

International application No.

**PCT/JP2021/041304**

### C. DOCUMENTS CONSIDERED TO BE RELEVANT

| Category* | Citation of document, with indication, where appropriate, of the relevant passages | Relevant to claim No. |
|---|---|---|
| X | JP 2003-170007 A (DAICEL CHEMICAL INDUSTRIES, LTD.) 17 June 2003 (2003-06-17) claim 4, paragraphs [0016], [0018], [0019] | 1-11 |
| X | JP 2001-340704 A (MIURA CO., LTD.) 11 December 2001 (2001-12-11) claim 1, paragraphs [0017], [0018], [0027] | 1-5, 7-11 |
| Y | | 4-6 |
| X | JP 2000-135407 A (MIURA CO., LTD.) 16 May 2000 (2000-05-16) claim 1, paragraphs [0010], [0011] | 1-5, 7-11 |
| Y | | 4-6 |
| Y | JP 2012-61372 A (FUKUI, Yoshikazu) 29 March 2012 (2012-03-29) paragraph [0012] | 6 |

Form PCT/ISA/210 (second sheet) (January 2015)

INTERNATIONAL SEARCH REPORT
Information on patent family members

International application No.

**PCT/JP2021/041304**

| Patent document cited in search report | | | Publication date (day/month/year) | Patent family member(s) | | | Publication date (day/month/year) |
|---|---|---|---|---|---|---|---|
| CN | 111807489 | A | 23 October 2020 | (Family: none) | | | |
| CN | 106335984 | A | 18 January 2017 | (Family: none) | | | |
| JP | 2014-184416 | A | 02 October 2014 | (Family: none) | | | |
| JP | 2007-196222 | A | 09 August 2007 | (Family: none) | | | |
| JP | 2003-170007 | A | 17 June 2003 | (Family: none) | | | |
| JP | 2001-340704 | A | 11 December 2001 | (Family: none) | | | |
| JP | 2000-135407 | A | 16 May 2000 | (Family: none) | | | |
| JP | 2012-61372 | A | 29 March 2012 | WO | 2010/131492 | A1 | |
| | | | | CN | 102015052 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003236559 A
- JP 2001340704 A
- JP 2000135407 A